# EUROPEAN PATENT APPLICATION

(11) **EP 3 407 131 A1**
(43) Date of publication of application: **28.11.2018**
(21) Application number: 17741284.8
(22) Date of filing: 12.01.2017
(51) Int. Cl.: G03B 21/14, G03B 21/00, G09G 3/20, G09G 3/34, H04N 5/74

(54) **PROJECTOR**

(30) Priority: 20.01.2016 JP 2016008577
(71) Applicant: Seiko Epson Corporation, Tokyo 160-8801 (JP)
(72) Inventor: YANASE Shigehiro, Suwa-shi Nagano 392-8502 (JP)
(74) Representative: Miller Sturt Kenyon
(86) International application number: PCT/JP2017/000773
(87) International publication number: WO 2017/126404

(57) **Abstract**

In a case where rotational frequency detection and light source turn-on control are performed on an illuminator basis, and when a rotation mechanism in one of the illuminators malfunctions and the light source is therefore caused to stop operating, but when the light source in the other illuminator keeps emitting light, a projected image differs from an original image, undesirably resulting in decrease in reliability of the projector.

A projector includes a first rotation mechanism that rotates a first optical element that affects light from a light source section, a first detector that detects a first rotational frequency of the first rotation mechanism, a second rotation mechanism that rotates a second optical element that affects the light from the light source section, a second detector that detects a second rotational frequency of the second rotation mechanism, a light modulator, a projection optical apparatus, and a control section. The control section causes the light source section to stop emitting the light in a case where at least one of the first rotational frequency and the second rotational frequency detected by the first detector and the second detector decreases to a value smaller than or equal to a non-zero threshold corresponding to the rotational frequency.

## Description

### Technical Field

The present invention relates to a projector.

### Background Art

PTL 1 discloses a projector using a solid-state light source that emits excitation light. The projector includes a first illuminator including a first light source and a first rotation mechanism provided with a rotary fluorescent plate that operates when it receives light from the first light source and a second illuminator including a second light source and a second rotation mechanism provided with a rotary diffuser plate that operates when it receives light from the second light source. In the technology of the related art, rotational frequency detection and light source turn-on control (turn-off control) are performed on an illuminator basis.

### Citation List

### Patent Literature

PTL 1: JP-A-2015-031876

### Summary of Invention

### Technical Problem

In the case where the rotational frequency detection and the light source turn-on control are performed on an illuminator basis, however, when the rotation mechanism in one of the illuminators malfunctions and the light source is therefore caused to stop operating, but when the light source in the other illuminator keeps emitting light, a projected image differs from an original image, undesirably resulting in decrease in reliability of the projector.

### Solution to Problem

The invention has been made to solve at least part of the problem described above and can be implemented in the form of the following aspects or application examples:

(1) According to an aspect of the invention, there is provided a projector including a light source section that outputs light, a first rotation mechanism that rotates a first optical element that affects the light from the light source section, a first detector that detects a first rotational frequency of the first rotation mechanism in accordance with a first rotation signal provided from the first rotation mechanism, a second rotation mechanism that rotates a second optical element that affects the light from the light source section, a second detector that detects a second rotational frequency of the second rotation mechanism in accordance with a second rotation signal provided from the second rotation mechanism, a light modulator that modulates the light affected by the first optical element and the light affected by the second optical element in accordance with image information, a projection optical apparatus that projects the light modulated by the light modulator, and a control section. The control section causes the light source section to stop emitting the light in a case where at least one of the first rotational frequency and the second rotational frequency detected by the first detector and the second detector decreases to a value smaller than or equal to a non-zero threshold corresponding to the rotational frequency.
   According to the projector, when at least one of the first rotational frequency and the second rotational frequency detected by the first detector and the second detector decreases to a value smaller than or equal to a non-zero threshold corresponding to the rotational frequency, the light source section is caused to stop emitting light, whereby the situation in which a projected image differs from an original image can be avoided. As a result, decrease in the reliability of the projector can be avoided.
(2) In the projector described above, the first detector and the second detector may each include a software detector that detects, in accordance with the rotation signal provided from the corresponding rotation mechanism, the rotational frequency based on software and a hardware detector that detects, in accordance with the rotation signal provided from the corresponding rotation mechanism, the rotational frequency based on a hardware circuit.

According to the configuration described above, in which the software detector and the hardware detector both detect the rotational frequencies, even if an error or a problem occurs in one of the software and hardware detectors, a decrease in the rotational frequencies of one of the detectors can be detected with the other.

The invention can be implemented in a variety of forms. For example, the invention can be implemented in the form of a projector, a method for controlling the same, a computer program for achieving the functions of the method and the projector, a non-transitory storage medium on which the computer program is recorded, and a variety of other forms.

### Brief Description of Drawings

[Fig. 1] Fig. 1 is a diagrammatic view showing the configuration of a projector according to an embodiment of the invention.
[Fig. 2] Fig. 2 is a diagrammatic view showing the configuration of an illuminator.
[Fig. 3] Fig. 3 is a block diagram showing the configuration of a control system of the projector.

### Description of Embodiments

### A. Schematic configuration of projector

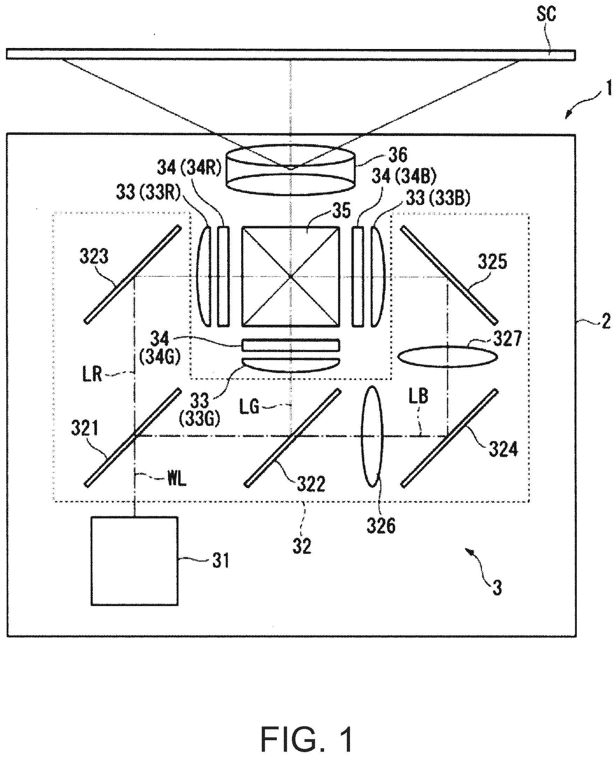

Fig. 1 is a diagrammatic view showing the configuration of a projector 1 according to an embodiment of the invention. The projector 1 according to the present embodiment is a display apparatus that modulates light outputted from an illuminator 31 provided in the projector 1 to form an image according to image information and enlarges and projects the image on a screen SC, which is a projection surface. The thus configured projector 1 includes an exterior enclosure 2 and an optical unit 3, which is accommodated in the exterior enclosure 2, as shown in Fig. 1. In addition, although not shown, the projector 1 includes a controller that controls the projector 1, a cooler that cools targets to be cooled, such as optical parts, and a power source that supplies electronic parts with electric power.

The optical unit 3 includes the illuminator 31, a color separator 32, parallelizing lenses 33, light modulators 34, a light combiner 35, and a projection optical apparatus 36. The illuminator 31 outputs illumination light WL. The configuration of the illuminator 31 will be described later in detail.

The color separator 32 separates the illumination light WL incident from the illuminator 31 into red light LR, green light LG, and blue light LB. The color separator 32 includes dichroic mirrors 321 and 322, reflection mirrors 323, 324, and 325, and relay lenses 326 and 327.

The dichroic mirror 321 extracts the red light LR and the other color light fluxes (green light LG and blue light LB) from the illumination light WL and separates the red light LR and the other color light fluxes from each other. The separated red light LR is reflected off the reflection mirror 323 and guided to the corresponding parallelizing lens 33 (33R). The separated other color light fluxes are incident on the dichroic mirror 322. The dichroic mirror 322 extracts the green light LG and the blue light LB from the other color light fluxes and separates the green light LG and the blue light LB from each other. The separated green light LG is guided to the corresponding parallelizing lens 33 (33G). The separated blue light LB travels via the relay lens 326, the reflection mirror 324, the relay lens 327, and the reflection mirror 325 and is guided to the corresponding parallelizing lens 33 (33B).

The parallelizing lenses 33 (reference characters 33R, 33G, and 33B denote parallelizing lenses for red light LR, green light LG, and blue light LB, respectively) each parallelize the light incident thereon.

The light modulators 34 (reference characters 34R, 34G, and 34B denote light modulators for red light LR, green light LG, and blue light LB, respectively) modulate the color light fluxes LR, LG, and LB incident thereon to form image light fluxes according to image information. The light modulators 34R, 34G, and 34B each include a liquid crystal panel that modulates a color light flux incident thereon and a pair of polarizers disposed on the light incident side and the light exiting side of the light modulators 34R, 34G, and 34B. An illuminated area that is illuminated with the light from the illuminator 31 which will be described later is set in an image formation area which is part of each of the light modulators 34 and where a color light flux incident thereon is modulated to form an image (modulation area).

The light combiner 35 combines the image light fluxes incident from light modulators 34R, 34G, and 34B (image light fluxes formed based on color light fluxes LR, LG, and LB described above). The light combiner 35 can be formed, for example, of a cross dichroic prism or may instead be formed of a plurality of dichroic mirrors.

The projection optical apparatus 36 projects the image light fluxes combined by the light combiner 35 on the screen SC as the projection surface. As the projection optical apparatus, although not shown, a lens unit in which a plurality of lenses are arranged in a lens barrel can be employed. The thus configured optical unit 3 projects an enlarged image on the screen SC.

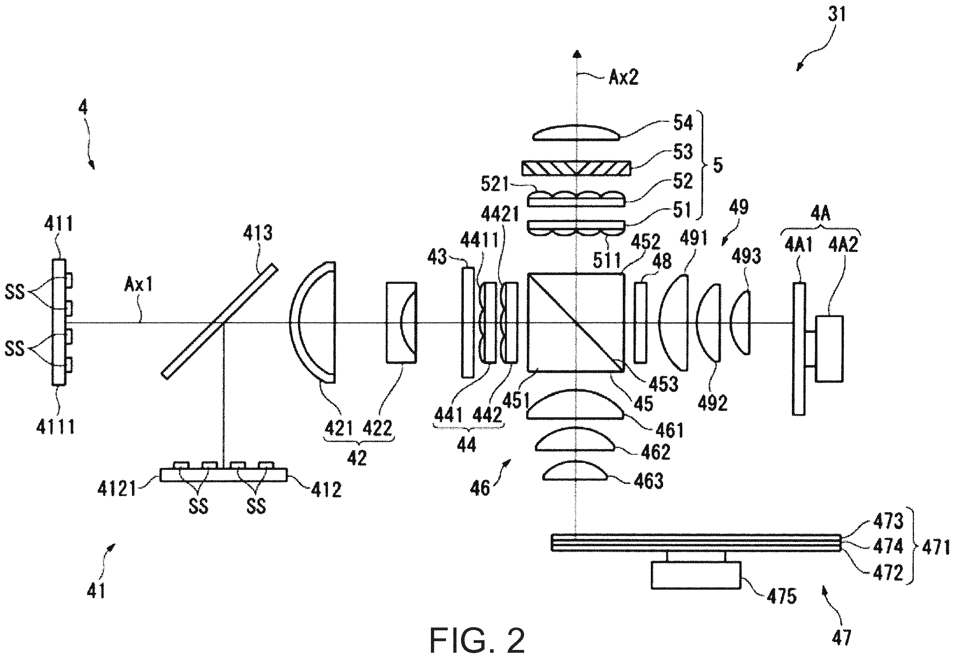

Fig. 2 is a diagrammatic view showing the configuration of the illuminator 31. The illuminator 31 outputs the illumination light WL toward the color separator 32, as described above. The illuminator 31 includes a light source apparatus 4 and a homogenizer 5, as shown in Fig. 2.

The light source apparatus 4 outputs a light flux to the homogenizer 5. The light source apparatus 4 includes a light source section 41, an afocal optical element 42, a first retardation element 43, a homogenizer optical element 44, a light separation element 45, a first light collection element 46, a wavelength converter 47, a second retardation element 48, a second light collection element 49, and a diffuser element 4A. Among them, the light source section 41, the afocal optical element 42, the first retardation element 43, the homogenizer optical element 44, the light separation element 45, the second retardation element 48, the second light collection element 49, and the diffuser element 4A are arranged along a first illumination optical axis Ax1. The light separation element 45 is disposed at the point where the first illumination optical axis Ax1 intersects a second illumination optical axis Ax2, which is perpendicular to the first illumination optical axis Ax1. On the other hand, the first light collection element 46 and the wavelength converter 47 are disposed along the second illumination optical axis Ax2 described above.

The light source section 41 outputs excitation light that is blue light toward the afocal optical element 42. The light source section 41 includes a first light source section 411, a second light source section 412, and a light combining member 413.

The first light source section 411 includes a solid-state light source array 4111, in which a plurality of solid-state light sources SS, which are each an LD (laser diode), are arranged in a matrix, and a plurality of parallelizing lenses (not shown) corresponding to the solid-state light sources SS. The second light source section 412 similarly includes a solid-state light source array 4121, in which a plurality of solid-state light sources SS are arranged in a matrix, and a plurality of parallelizing lenses (not shown) corresponding to the solid-state light sources SS. The solid-state light sources SS each emit excitation light the intensity of which peaks, for example, at a wavelength of 440 nm, and may instead emit excitation light the intensity of which peaks at a wavelength of 446 nm. Still instead, solid-state light sources that each emit excitation light the intensity of which peaks at the wavelength of 440 nm and solid-state light sources that each emit excitation light the intensity of which peaks at the wavelength of 446 nm may be mixed with each other to form each of the light source sections 411 and 412. The excitation light emitted from each of the solid-state light sources SS is parallelized by the corresponding parallelizing lens and incident on the light combining member 413. In the present embodiment, the excitation light emitted from each of the solid-state light sources SS is S-polarized light.

The light combining member 413 transmits the excitation light fluxes outputted from the first light source section 411 along the first illumination optical axis Ax1 and reflects the excitation light fluxes outputted from the second light source section 412 along the direction perpendicular to the first illumination optical axis Ax1 in such a way that the reflected excitation light fluxes travel along the first illumination optical axis Ax1 to combine the excitation light fluxes from the two light source sections with each other. The light combining member 413, although not illustrated in detail, is formed of a plate-shaped element in which a plurality of light transmitting sections that are disposed in the positions where the excitation light fluxes outputted from the first light source section 411 are incident and transmit the excitation light fluxes and a plurality of light reflecting sections that are disposed in the positions where the excitation light fluxes outputted from the second light source section 412 are incident and reflect the excitation light fluxes are alternately arranged. The excitation light having exited out of the thus configured light combining member413 is incident on the afocal optical element 42.

The afocal optical element 42 adjusts the light flux diameter of the excitation light incident from the light source section 41. Specifically, the afocal optical element 42 is an optical element that causes the excitation light incident in the form of parallelized light from the light source section 41 to converge so that the light flux diameter decreases, parallelizes the convergent light, and outputs the parallelized light. The afocal optical element 42 includes lenses 421 and 422, which are a convex lens and a concave lens, respectively, and the excitation light outputted from the light source section 41 is caused to converge by the afocal optical element 42 and incident on the first retardation element 43 and then the homogenizer optical element 44.

The first retardation element 43 is a half-wave plate. The excitation light, which is S-polarized light outputted from the light source section 41, passes through the first retardation plate 43, which converts part of the S-polarized light into P-polarized light, whereby the excitation light becomes light formed of S-polarized light and P-polarized light mixed with each other. Then excitation light having passed through the first retardation plate 43 is incident on the homogenizer optical element 44. In the present embodiment, the first retardation element 43 is configured to be pivotable around the optical axis of the first retardation element 43 (which coincides with first illumination optical axis Ax1). Rotating the first retardation element 43 allows the ratio between the S-polarized light and P-polarized light out of the excitation light passing through the first retardation element 43 to be adjusted in accordance with the amount of pivotal motion (angle of pivotal motion) of the first retardation element 43.

The homogenizer optical element 44 homogenizes the illuminance distribution of the excitation light incident on a phosphor layer 473, which is an illuminated area of the wavelength converter 47, which will be described later. The homogenizer optical element 44 includes a first multi-lens 441 and a second multi-lens 442.

The first multi-lens 441 has a configuration in which a plurality of first lenses 4411 are arranged in a matrix in a plane perpendicular to the first illumination optical axis Ax1, and the plurality of first lenses 4411 divide the excitation light incident thereon into a plurality of sub-light fluxes (excitation sub-light fluxes).

The second multi-lens 442 has a configuration in which a plurality of second lenses 4421 corresponding to the plurality of first lenses 4411 described above are arranged in a matrix in a plane perpendicular to the first illumination optical axis Ax1. The second multi-lens 442 cooperates with the second lenses 4421 and the second light collection element 49 to superimpose the plurality of divided excitation sub-light fluxes by the first lenses 4411 on the phosphor layer 473, which is the illuminated area described above. The illuminance in a plane perpendicular to the center axis of the excitation light incident on the phosphor layer 473 (in a plane perpendicular to second illumination optical axis Ax2) is thus homogenized.

The excitation light having exited out of the homogenizer optical element 44 is incident on the light separation element 45. The multi-lenses 441 and 442, which form the homogenizer optical element 44, are each movable along a plane perpendicular to the first illumination optical axis Ax1. That is, the homogenizer optical element 44 includes, although not shown, a first frame that supports the first multi-lens 441, a second frame that movably supports the first frame along one of the two axes perpendicular to the first illumination optical axis Ax1, and a third frame that movably supports the second frame along the other axis. The homogenizer optical element 44 further includes a first frame that supports the second multi-lens 442, a second frame that movably supports the first frame along one of the two axes perpendicular to the first illumination optical axis Ax1, and a third frame that movably supports the second frame along the other axis. Moving the multi-lenses 441 and 442 allows adjustment of the traveling direction of the excitation light having exited out of the homogenizer optical element 44. The multi-lenses 441 and 442 are not necessarily movable independently of each other and may be movable simultaneously.

The light separation element 45 is a prism-shaped polarizing beam splitter (PBS), is formed by bonding prisms 451 and 452, which are each formed in a roughly triangular columnar shape, along surfaces thereof, and therefore has a roughly box-like shape as a whole. The interface between the prisms 451 and 452 is inclined by about 45° with respect to both the first illumination optical axis Ax1 and the second illumination optical axis Ax2. In the light separation element 45, a polarization separation layer 453 having wavelength selectivity is formed on the interface-facing surface of the prism 451, which is located on the side facing the homogenizer optical element 44 (that is, the side facing the light source section 41).

The polarization separation layer 453 is characterized not only in that it separates the S-polarized light (first excitation light) and the P-polarized light (second excitation light) contained in the excitation light from each other but in that it transmits fluorescence produced when the excitation light is incident on the wavelength converter 47, which will be described later, irrespective of the polarization state of the fluorescence. That is, the polarization separation layer 453 performs wavelength selective polarization separation characterized in that the polarization separation layer 453 separates light within a predetermined wavelength region into S-polarized light and P-polarized light but transmits both S-polarized light and P-polarized light contained in light within another predetermined wavelength region. The thus configured light separation element 45, which receives the excitation light incident from the homogenizer optical element 44, transmits P-polarized light toward the second retardation element 48 along the first illumination optical axis Ax1 and reflects S-polarized light toward the first light collection element 46 along the second illumination optical axis Ax2. That is, the light separation element 45 causes the P-polarized light out of the excitation light to exit toward the second retardation element 48 (and hence diffuser element 4A) and the S-polarized light out of the excitation light to exit toward the first light collection element 46.

The S-polarized excitation light having passed through the homogenizer optical element 44 and having been reflected off the polarization separation layer 453 is incident on the first light collection element 46. The first light collection element 46 not only collects (focuses) the excitation light onto a wavelength conversion element 471 but collects and parallelizes fluorescence emitted from the wavelength conversion element 471 and causes the fluorescence to exit toward the polarization separation layer 453. The first light collection element 46 is formed of three pickup lenses 461 to 463. The number of lenses that form the first light collection element 46 is, however, not limited to three.

The wavelength converter 47 converts the excitation light incident thereon into fluorescence. The wavelength converter 47 includes the wavelength conversion element 471 and a rotator 475. Out of the two components, the rotator 475 is formed, for example, of a motor that rotates the wavelength conversion element 471, which is formed in a flat-plate-like shape.

The wavelength conversion element 471 includes a substrate 472, and a phosphor layer 473 and a reflection layer 474, which are located on the excitation light incident surface of the substrate 472. The substrate 472 is formed in a roughly circular shape when viewed from the excitation light incident side. The substrate 472 can be made, for example, of a metal or ceramic material. The phosphor layer 473 contains a phosphor that is excited by the excitation light incident thereon and emits fluorescence (yellow light the intensity of which peaks at a wavelength within a wavelength range, for example, from 500 to 700 nm), which is non-polarized light. Part of the fluorescence produced by the phosphor layer 473 exits toward the first light collection element 46, and the other part of the fluorescence exits toward the reflection layer 474. The reflection layer 474 is disposed between the phosphor layer 473 and the substrate 472 and reflects the fluorescence incident from the phosphor layer 473 toward the first light collection element 46. When the thus configured wavelength conversion element 471 is irradiated with the excitation light, the phosphor layer 473 and the reflection layer 474 cause the fluorescence described above to diffusively exit toward the first light collection element 46. The fluorescence is incident on the polarization separation layer 453 of the light separation element 45 via the first light collection element 46, passes through the polarization separation layer 453 along the second illumination optical axis Ax2, and enters the homogenizer 5. That is, the light separation element 45 causes the fluorescence produced by the wavelength conversion element 471 to exit along the second illumination optical axis Ax2.

The wavelength converter 47 is so configured that at least the position of the phosphor layer 473 is movable relative to the first light collection element 46 along the second illumination optical axis Ax2. Specifically, in the present embodiment, the entire wavelength converter 47 is configured to be movable along the second illumination optical axis Ax2. That is, although not shown, the wavelength converter 47 has a movement mechanism that movably supports the rotator 475 described above along the second illumination optical axis Ax2. Moving the wavelength converter 47 (phosphor layer 473) as described above allows adjustment of the defocus position of the excitation light with respect to the phosphor layer 473. The movement allows adjustment of the light flux diameter of the fluorescence diffusively outputted from the wavelength converter 47, and hence allows adjustment of the light flux diameter of the fluorescence reflected off the polarization separation layer 453 and traveling toward the homogenizer 5.

The second retardation element 48 is a quarter-wave plate and converts the polarization state of the excitation light (linearly polarized light) incident from the light separation element 45 into circular polarization.

The second light collection element 49 is an optical element that collects (focuses) the excitation light having passed through the second retardation element 48 onto the diffuser element 4A and is formed of three pickup lenses 491 to 493 in the present embodiment. The number of lenses that form the second light collection element 49 is, however, not limited to three, as in the case of the first light collection element 46.

The diffuser element 4A diffusively reflects the excitation light incident thereon at the same angle of diffusion as the angle at which the fluorescence produced by and outputted from the wavelength converter 47 diffuses. The diffuser element 4A includes a reflection plate 4A1, which causes light incident thereon to undergo Lambertian reflection, and a rotator 4A2, which rotates the reflection plate 4A1 to cool it. The excitation light diffusively reflected off the thus configured diffuser element 4A is incident again on the second retardation element 48 via the second light collection element 49. The circularly polarized light incident on the diffuser element 4A is converted, when reflected off the diffuser element 4A, into reverse-direction circularly polarized light, which is converted, when passing through the second retardation element 48, into S-polarized excitation light rotated by 90° with respect to the polarization state of the excitation light. The converted excitation light is then reflected off the polarization separation layer 453 described above, travels along the second illumination optical axis Ax2, and is incident as blue light on the homogenizer 5. That is, the light separation element 45 causes the excitation light diffusively reflected off the diffuser element 4A to exit along the second illumination optical axis Ax2.

The second light collection element 49 is configured to be movable along a plane perpendicular to the first illumination optical axis Ax1. That is, the second light collection element 49 includes, although not shown, a holder that holds the pickup lenses 491 to 493 described above, a first support that movably supports the holder along one of the two axes perpendicular to the first illumination optical axis Ax1, and a second support that movably supports the first support along the other axis. Moving the second light collection element 49 as described above allows adjustment of the angle of incidence of the excitation light (blue light) diffused by the diffuser element 4A and incident on the polarization separation layer 453 and hence the angle of inclination, with respect to the second illumination optical axis Ax2, of the excitation light reflected off the polarization separation layer 453 and traveling toward the homogenizer 5. When the homogenizer optical element 44 described above is moved, the optical path of the excitation light having passed through the homogenizer optical element 44 changes, and the optical path of the excitation light passing through the second light collection element 49 therefore also changes. The movement of the second light collection element 49 therefore also functions to complement the change of the optical path of the blue light resulting from the movement of the homogenizer optical element 44.

In the present embodiment, the diffuser element 4A is configured to be movable along the first illumination optical axis Ax1. That is, the diffuser element 4A, although not shown, includes a movement mechanism that movably supports the rotator 4A2 described above along the first illumination optical axis Ax1. Moving the diffuser element 4A as described above allows adjustment of the light flux diameter of the excitation light incident on the diffuser element 4A, allowing adjustment of the light flux diameter of the excitation light diffused by the diffuser element 4A and hence the light flux diameter of the excitation light reflected off the polarization separation layer 453 and traveling toward the homogenizer 5.

As described above, out of the two components of the excitation light incident on the light separation element 45 via the homogenizer optical element 44, the S-polarized light (first excitation light) is converted by the wavelength converter 47 in terms of wavelength into the fluorescence, which is yellow light (green light + red light), then passes through the light separation element 45, and enters the homogenizer 5. On the other hand, the P-polarized light (second excitation light) is diffusively reflected when it is incident on the diffuser element 4A, passes through the second retardation element 48 twice before and after the reflection, is reflected off the light separation element 45, and enters as blue light the homogenizer 5. That is, the blue light, the green light, and the red light are combined with one another by the light separation element 45, and the combined light exits along the second illumination optical axis Ax2 and enters as the white illumination light WL the homogenizer 5.

The homogenizer 5 homogenizes the illuminance of the illumination light WL incident from the light source apparatus 4 in a plane perpendicular to the center axis of the illumination light WL (plane perpendicular to optical axis), specifically, homogenizes the illuminance distribution of the light flux in the image formation area (modulation area), which is the illuminated area of each of the light modulators 34 (34R, 34G, and 34B). The homogenizer 5 includes a first lens array 51, a second lens array 52, a polarization conversion element 53, and a superimposing lens 54. The configurations 51 to 54 are so arranged that the optical axes thereof coincide with the second illumination optical axis Ax2.

The first lens array 51 has a configuration in which a plurality of lenslets 511, which are each a lenslet, are arranged in a matrix in a plane perpendicular to the optical axis (plane perpendicular to second illumination optical axis Ax2 in first lens array 51), and the plurality of lenses 511 divide the illumination light WL incident thereon into a plurality of sub-light fluxes.

The second lens array 52 has a configuration in which a plurality of lenslets 521 are arranged in a matrix in a plane perpendicular to the optical axis, as in the case of the first lens array 51, and the lenslets 521 are each related to the corresponding lenslet 511 in the one-to-one relationship. That is, on a lenslet 521 is incident a sub-light flux having exited out of the corresponding lenslet 511. The lenslets 521 along with the superimposing lens 54 superimpose the plurality of divided sub-light fluxes from the lenslets 511 on one another in the aforementioned image formation area of each of the light modulators 34.

The polarization conversion element 53 is disposed between the second lens array 52 and the superimposing lens 54 and has the function of aligning the polarization directions of the plurality of sub-light fluxes incident on the polarization conversion element 53 with one another.

As described above, in the projector 1, the wavelength conversion element 471 (first optical element), which affects the light from the light source section 41, and the reflection plate 4A1 (second optical element), which affects the light from the light source section 41, are rotated. The light affected by each of the optical elements is modulated by the light modulators 34 (Fig. 1) in accordance with image information, and the modulated light is projected via the projection optical apparatus 36 onto the screen SC.

### B. Configuration of control system

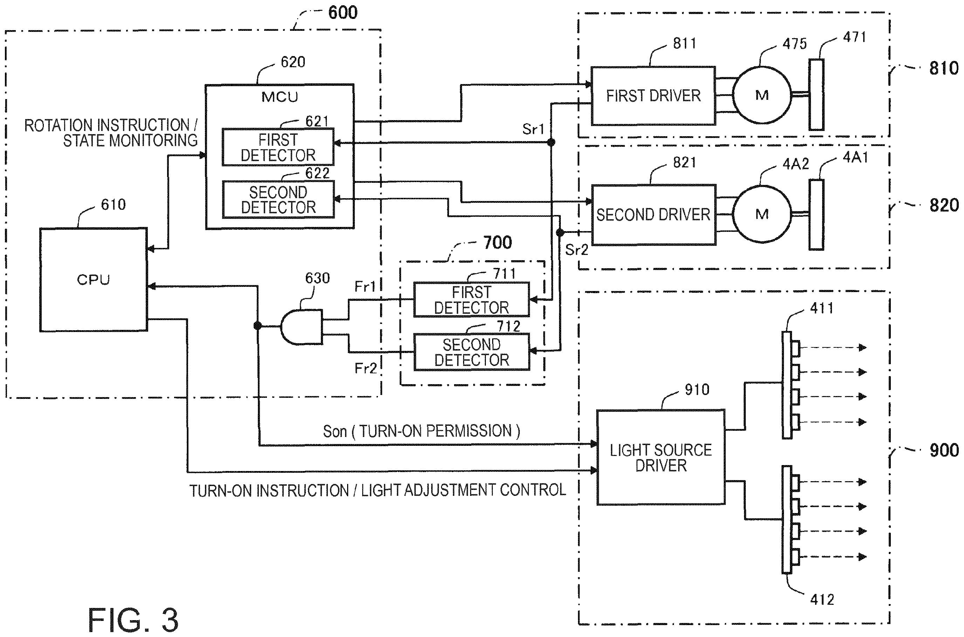

Fig. 3 is a block diagram showing the configuration of a control system of the projector 1. The control system includes a control section 600, a rotational frequency detecting section 700, a first rotation mechanism 810 and a second rotation mechanism 820, and a light source section 900.

The control section 600 includes a CPU 610, which controls the entire projector 1, a motor control unit (MCU) 620, and an AND circuit 630. The MCU 620 is a microprocessor that executes software (computer program) to not only instruct the rotation mechanisms 810 and 820 to rotate but monitor the state of the rotation. The MCU 620 has the function as a first detector 621 and a second detector 622, which uses rotation signals Sr1 and Sr2 (which will be described later) provided from the rotation mechanisms 810 and 820 to detect the rotational frequency of the rotation mechanisms 810 and 820.

The first rotation mechanism 810 includes the wavelength conversion element 471 (first optical element) and the rotator 475 described with reference to Fig. 2 and a first driver 811, which drives the rotator 475. The first driver 811 is a switching circuit that drives the rotator 475 (motor) in accordance with the rotation instruction provided from the MCU 620. The first driver 811 further has the function of outputting the rotation signal Sr1, which represents the state of rotation of the wavelength conversion element 471, to an external apparatus. The rotation signal Sr1 can, for example, be a signal carrying A/D-converted voltage induced by a coil of the rotator 475. Instead, a sensor (Hall element or rotary encoder, for example) that outputs a signal according to the state of rotation of the rotator 475 and the wavelength conversion element 471 may be provided, and the output from the sensor may be used as the rotation signal Sr1. The rotation signal Sr1 is provided to the first detector 621 of the MCU 620 and a first detector 711 of the rotational frequency detecting section 700.

The second rotation mechanism 820 includes the reflection plate 4A1 (second optical element) and the rotator 4A2 described with reference to Fig. 2 and a second driver 821, which drives the rotator 4A2. The second driver 821 also has the same configuration and function as those of the first driver 811 described above and outputs the rotation signal Sr2, which represents the state of rotation of the reflection plate 4A1 to an external apparatus. The rotation signal Sr2 is provided to the second detector 622 of the MCU 620 and a second detector 712 of the rotational frequency detecting section 700.

The light source section 900 includes the first light source section 411 and the second light source section 412, which have been described with reference to Fig. 2, and a light source driver 910, which drives the two light source sections. The light source driver 910 controls the turn-on states of the first light source section 411 and the second light source section 412 and adjusts the amounts of light therefrom in accordance with instructions provided from the CPU 610.

The rotational frequency detecting section 700 is a hardware circuit that detects the rotational frequencies of the rotation mechanisms 810 and 820. The rotational frequency detecting section 700 includes the first detector 711 and the second detector 712, which use the rotation signals Sr1 and Sr2 provided from the rotation mechanisms 810 and 820 to detect the rotational frequencies thereof.

The first detector 711 changes a rotational frequency flag Fr1 from 0 to 1 when a first rotational frequency of the first rotation mechanism 810 exceeds a non-zero first threshold set in advance. The second detector 712 similarly changes a rotational frequency flag Fr2 from 0 to 1 when a second rotational frequency of the second rotation mechanism 820 exceeds a non-zero second threshold set in advance. The thresholds represent rotational frequencies that allow determination of normal rotation of the rotation mechanisms 810 and 820 and are empirically or experimentally set in advance. The first and second thresholds may be equal to or differ from each other. The rotational frequency flags Fr1 and Fr2 are inputted to the AND circuit 630 of the control section 600. The output from the AND circuit 630 is supplied as a turn-on permission signal Son to the light source driver 910 and the CPU 610. In the case where the light source driver 910 has received the turn-on permission signal Son (=1) from the AND circuit 630, the light source driver 910 turns on the light source sections 411 and 412 in accordance with an instruction from the CPU 610.

Assume now that one or both the first rotational frequency of the first rotation mechanism 810 and the second rotational frequency of the second rotation mechanism 820 decrease to values smaller than or equal to the thresholds. In this case, since one or both the two rotational frequency flags Fr1 and Fr2 change from 1 to 0, the turn-on permission signal Son outputted from the AND circuit 630 also changes from 1 to 0. As a result, no turn-on permission is provided from the AND circuit 630 to the light source driver 910, the light source driver 910 turns off the light source sections 411 and 412. In other words, the AND circuit 630 of the control section 600 causes the light source sections 411 and 412 to stop emitting light when at least one of the first and second rotational frequencies detected by the first detector 711 and the second detector 712 decreases to a value smaller than or equal to the non-zero threshold corresponding to the rotational frequency. Therefore, also when the rotational frequency of one of the two rotation mechanisms 810 and 820 decreases, the situation in which a projected image differs from an original image can be avoided, whereby decrease in the reliability of the projector can be avoided. The turn-on permission signal Son is also provided to the CPU 610, and the CPU 610 performs control required as appropriate (warning display, for example) when the turn-on permission signal Son changes from 1 to 0.

The first detector 621 of the MCU 620 has the function of detecting the rotational frequency of the first rotation mechanism 810 by using the rotation signal Sr1 provided therefrom. The first detector 621 further has the function of evaluating whether or not the first rotational frequency of the first rotation mechanism 810 has exceeded the non-zero first threshold set in advance, as does the first detector 711 of the rotational frequency detecting section 700. The second detector 622 of the MCU 620 similarly has the function of detecting the rotational frequency of the second rotation mechanism 820 by using the rotation signal Sr2 provided therefrom and the function of evaluating whether or not the first rotational frequency of the second rotation mechanism 820 has exceeded the non-zero second threshold set in advance. When at least one of the first rotational frequency and the second rotational frequency detected by the first detector 621 and the second detector 622 decreases to a value smaller than or equal to the non-zero threshold corresponding to the rotational frequency, the MCU 620 notifies the CPU of the decrease, and the CPU 610 causes the light source sections 411 and 412 to stop emitting light in accordance with the notification.

According to the embodiment described above, when at least one of the rotational frequencies of the two rotation mechanisms 810 and 820 decreases to a value smaller than or equal to the non-zero threshold corresponding to the rotational frequency, the light source sections 411 and 412 are caused to stop emitting light, whereby the situation in which a projected image differs from an original image can be avoided. As a result, decrease in the reliability of the projector can be avoided.

Further, when the projector 1 starts operating, the light source sections 411 and 412 are allowed to be turned on after the rotational frequencies of both the two rotation mechanisms 810 and 820 reach normal rotational frequencies that exceed the thresholds. A situation in which the light source sections 411 and 412 are turned on with the two rotation mechanisms 810 and 820 operating at insufficient rotational frequencies can be avoided. As a result, a situation in which the wavelength conversion element 471 (first optical element) and the reflection plate 4A1 (second optical element) are irradiated with the light in an insufficient rotation state so that the wavelength conversion element 471 and the reflection plate 4A1 are damaged can be avoided.

Further, in the embodiment described above, as the detectors that detect the rotational frequencies, the detectors 621 and 622, which are achieved by software, and the detectors 711 and 712, which are achieved by the hardware circuits, are both provided. Therefore, even if an error or a problem occurs in one of the software and hardware detectors, a decrease in the rotational frequencies of one of the detectors can be detected with the other. It is, however, noted that the detectors 621 and 622, which are achieved by software, or the detectors 711 and 712, which are achieved by the hardware circuits, may be omitted.

### -Variations:

The invention is not limited to the example and embodiment described above and can be implemented in a variety of aspects to the extent that they do not depart from the substance of the invention. For example, the following variations are conceivable:

### -Variation 1:

In the embodiment described above, as the optical elements that affect the light from the light source section, the wavelength conversion element 471 (first optical element) and the reflection plate 4A1 (second optical element) as the diffuser element 4A are used, and the invention is also applicable to a projector including a rotation mechanism that rotates an optical element different from the optical elements described above. For example, the invention is also applicable to a projector including as the light source section three light source sections that output red light, green light, and blue light and three rotation mechanisms that rotate diffuser elements for the three color light fluxes. The "optical element that affects light" means an optical element that changes a light flux incident thereon in some way other than a change in the traveling direction of the entire light flux.

### -Variation 2:

In the embodiment described above, solid-state light sources are used, and the invention is also applicable to a projector including light sources different from solid-state light sources. Further, in the embodiment described above, two light source sections 411 and 412 are provided, and the number of light source sections can be changed as appropriate in accordance with the arrangement of the optical system. For example, only one light source section common to the first optical element and the second optical element may be provided. Instead, the first light source section for the first optical element and the second light source section for the second optical element may be separately provided.

The embodiment of the invention has been described based on some examples. The embodiment of the invention described above is intended to facilitate understanding of the invention and is not intended to limit the invention. The invention can be changed and improved without departure from the substance of the invention and the claims, and equivalents of the invention, of course, fall within the scope of the invention.

### Reference Signs List

1: Projector, 2: Exterior enclosure, 3: Optical unit, 4: Light source apparatus, 4A: Diffuser element, 4A1: Reflection plate, 4A2: Rotator, 5: Homogenizer, 31: Illuminator, 32: Color separator, 33: Parallelizing lens, 34, 34R, 34B, 34G: Light modulator, 35: Light combiner, 36: Projection optical apparatus, 41: Light source section, 42: Afocal optical element, 43: First retardation element, 44: Homogenizer optical element, 45: Light separation element, 46: First light collection element, 47: Wavelength converter, 48: Second retardation element, 49: Second light collection element, 51: First lens array, 52: Second lens array, 53: Polarization conversion element, 54: Superimposing lens, 321: Dichroic mirror, 322: Dichroic mirror, 323: Reflection mirror, 324: Reflection mirror, 325: Reflection mirror, 326: Relay lens, 327: Relay lens, 411: First light source section, 412: Second light source section, 413: Light combining member, 421: Lens, 422: Lens, 441: First multi-lens, 442: Second multi-lens, 451: Prism, 453: Polarization separation layer, 461 to 463: Pickup lens, 471: Wavelength conversion element, 472: Substrate, 473: Phosphor layer, 474: Reflection layer, 475: Rotator, 491 to 493: Pickup lens, 511, 521: Lenslet, 600: Control section, 610: CPU, 620: MCU (motor control unit), 621: First detector, 622: Second detector, 630: AND circuit, 700: Rotational frequency detecting section, 711: First detector, 712: Second detector, 810: First rotation mechanism, 811: First driver, 820: Second rotation mechanism, 821: Second driver, 900: Light source section, 910: Light source driver, 4111, 4121: Solid-state light source array, 4411: First lens, 4421: Second lens, Ax1: First illumination optical axis, Ax2: Second illumination optical axis, Fr1, Fr2: Rotational frequency flag, LB: Blue light, LG: Green light, LR: Red light, SC: Screen, SS: Solid-state light source, Son: Turn-on permission signal, Sr1, Sr2: Rotation signal, WL: Illumination light

## Claims

1. A projector **characterized in that** the projector comprises:
a light source section that outputs light;
a first rotation mechanism that rotates a first optical element that affects the light from the light source section;
a first detector that detects a first rotational frequency of the first rotation mechanism in accordance with a first rotation signal provided from the first rotation mechanism;
a second rotation mechanism that rotates a second optical element that affects the light from the light source section;
a second detector that detects a second rotational frequency of the second rotation mechanism in accordance with a second rotation signal provided from the second rotation mechanism;
a light modulator that modulates the light affected by the first optical element and the light affected by the second optical element in accordance with image information;
a projection optical apparatus that projects the light modulated by the light modulator; and
a control section that controls the light source section, and
the control section causes the light source section to stop emitting the light in a case where at least one of the first rotational frequency and the second rotational frequency detected by the first detector and the second detector decreases to a value smaller than or equal to a non-zero threshold corresponding to the rotational frequency.

2. The projector according to claim 1,
wherein the first detector and the second detector each include a software detector that detects, in accordance with the rotation signal provided from the corresponding rotation mechanism, the rotational frequency based on software and a hardware detector that detects, in accordance with the rotation signal provided from the corresponding rotation mechanism, the rotational frequency based on a hardware circuit.

3. The projector according to claim 1 or 2, **characterized in that**
the first optical element is a wavelength conversion element that converts excitation light incident thereon into fluorescence, and
the second optical element is a diffuser element that diffusively reflects excitation light incident thereon.
